# FASCICULE DE BREVET EUROPEEN

(11) **EP 4 183 614 B1**
(45) Date de publication et mention de la délivrance du brevet: **30.04.2025**
(21) Numéro de dépôt: 22207848.7
(22) Date de dépôt: 16.11.2022
(51) Int. Cl.: B60L 5/36, B60L 5/38, B60M 1/30

(54) **PROCÉDÉ DE DÉTERMINATION D'UNE POSITION LATÉRALE D'UN COLLECTEUR PAR RAPPORT À UN RAIL ALIMENTÉ EN ÉNERGIE ÉLECTRIQUE, DISPOSITIF DE DÉTERMINATION ET VÉHICULE ASSOCIÉS**
VERFAHREN ZUR BESTIMMUNG EINER SEITLICHEN POSITION EINES KOLLEKTORS GEGENÜBER EINER ELEKTRISCH BETRIEBENEN SCHIENE, BESTIMMUNGSVORRICHTUNG UND FAHRZEUG
METHOD FOR DETERMINING A LATERAL POSITION OF A COLLECTOR RELATIVE TO AN ELECTRIC-POWERED RAIL, ASSOCIATED DETERMINATION DEVICE AND VEHICLE

(30) Priorité: 17.11.2021 FR 2112138
(43) Date de publication de la demande: 24.05.2023
(73) Titulaire: ALSTOM Holdings, 93400 Saint-Ouen-sur-Seine (FR)
(72) Inventeur: HOURTANE, Jean-Luc, 13320 BOUC BEL AIR (FR); SHAKIL, Ali, Muhammad, 13004 MARSEILLE (FR)
(74) Mandataire: Plasseraud IP

(56) Documents cités:
- FR-A1- 2 020 865
- FR-A1- 3 065 403
- JP-A- 2013 198 203
- US-A- 3 998 305
- US-A- 4 577 140
- US-A1- 2018 290 549
- US-A1- 2019 263 267
- US-B2- 9 238 411

## Description

La présente invention concerne un procédé et un dispositif de détermination d'une position latérale d'un collecteur par rapport à un rail alimenté en énergie électrique, le rail étant associé à une source de champ magnétique, le collecteur étant propre à collecter de l'énergie électrique par contact avec le rail, le procédé étant du type comprenant une mesure d'un champ magnétique par chacun de deux capteurs de proximité disposés au droit du rail et dont une position par rapport au collecteur est connue, et la détermination de la position latérale du collecteur à partir des champs magnétiques mesurés. D'autres caractéristiques de l'invention sont définies dans les revendications indépendantes 1 et 2.

WO 2017/102029 A1 décrit un véhicule routier propre à rouler sur une voie comprenant un rail alimenté en énergie électrique auquel est associée une source de champ magnétique, formée par une spire entourant le rail et elle-même alimentée par un courant alternatif dont une phase est connue du véhicule. Le véhicule comprend un collecteur propre à collecter de l'énergie électrique par contact avec le rail. Le véhicule comprend en outre un dispositif de détermination d'une position du collecteur par rapport au rail. Ce dispositif comporte une pluralité de capteurs inductifs solidaires du collecteur et propres à mesurer le champ magnétique généré par la spire. Le dispositif de détermination comprend également un module de détermination de la position du collecteur par rapport au rail par comparaison de phases des champs magnétiques mesurés avec la phase connue du courant alternatif, circulant dans la spire.

Cependant, une telle détermination de la position du collecteur par rapport au rail requiert une connaissance de la phase du courant alternatif dans la spire. Ainsi, si la connaissance de cette phase est erronée, le dispositif de détermination est dans l'incapacité de déterminer la position du collecteur par rapport au rail.

US 2018/290549 A1 décrit un procédé de détermination d'une position latérale d'un collecteur de courant par rapport à un rail alimenté en énergie électrique.

La présente invention a pour but d'améliorer la fiabilité de la détermination de la position latérale du collecteur par rapport au rail.

A cet effet, l'invention a pour objet un procédé de détermination d'une position latérale d'un collecteur par rapport à un rail alimenté en énergie électrique, le procédé étant du type précité, dans lequel lors de l'étape de détermination, la position latérale du collecteur par rapport au rail est déterminée à partir des amplitudes de chaque champ magnétique mesuré.

Ainsi, le procédé selon l'invention ne nécessite pas la connaissance d'une phase servant à générer le champ magnétique puisque la détermination de la position latérale du collecteur par rapport au rail est effectuée à partir des amplitudes de chaque champ mesuré.

Selon l'invention, le procédé comprend les caractéristiques suivantes, suivant toutes les combinaisons techniquement possibles :
- lors de l'étape de détermination, la position latérale du collecteur par rapport au rail est déterminée uniquement à partir des amplitudes de chaque champ magnétique mesuré, les phases de chaque champ n'étant pas prise en compte,
- lors de l'étape de détermination, la position latérale du collecteur par rapport au rail est déterminée à partir d'une différence entre les amplitudes de chaque champ magnétique mesuré,
- le procédé comprend en outre, entre l'étape de mesure et l'étape de détermination, une étape de filtrage par un filtre passe-bande de chaque champ magnétique mesuré, et en ce que lors de l'étape détermination, la position latérale du collecteur par rapport au rail est déterminée à partir de chaque champ magnétique filtré, et
- le procédé comprend en outre entre l'étape de filtrage et l'étape de détermination, une étape de détection, dans chaque champ mesuré, d'un maximum d'amplitude dudit champ.

L'invention a également pour objet un dispositif électronique de détermination d'une position latérale d'un collecteur par rapport à un rail alimenté en énergie électrique, le rail étant associé à une source de champ magnétique, le collecteur étant propre à collecter de l'énergie électrique par contact avec le rail, le dispositif de détermination comprenant :
- deux capteurs de proximité propres à être disposés au droit du rail et dont une position par rapport au collecteur est connue, chaque capteur de proximité étant propre à mesurer un champ magnétique, et
- un module de détermination propre à déterminer une position latérale du collecteur à partir des champs magnétiques mesurés,
le module de détermination étant configuré pour déterminer la position latérale du collecteur par rapport au rail à partir des amplitudes de chaque champ magnétique mesuré.

Selon l'invention, le dispositif électronique de détermination comprend en outre un module de filtrage configuré pour filtrer et amplifier chaque champ mesuré par les capteurs de proximité. Le module de détermination est configuré pour déterminer la position latérale du collecteur par rapport au rail à partir des amplitudes de chaque champ magnétique filtré.

De préférence, le filtrage est du type passe-bande.

Selon l'invention, le dispositif électronique de détermination comprend en outre un module de détection de crête configuré pour détecter des maximums d'amplitude, en valeur absolue, dans chaque champ filtré.

De préférence, le module de détection de crête est propre à fournir l'amplitude maximale de chaque champ mesuré, cette amplitude maximale étant prise égale au maximum d'amplitude correspondant à la crête détectée.

L'invention a également pour objet un véhicule routier ou ferroviaire propre à rouler sur une voie comprenant un rail alimenté en énergie électrique auquel une source de champ magnétique est associée, le véhicule comprenant une caisse, un collecteur propre à collecter de l'énergie électrique par contact avec le rail et un dispositif de détermination d'une position latérale du collecteur par rapport au rail selon la revendication 2, le collecteur étant mobile par rapport à la caisse.

Suivant des modes de modes de réalisation particuliers, le véhicule est selon l'une ou plusieurs des revendications 4 à 7.

Ces caractéristiques et avantages de l'invention apparaîtront plus clairement à la lecture de la description qui va suivre, donnée uniquement à titre d'exemple non limitatif et faite en référence aux dessins annexés, sur lesquels :
- la figure 1 est une vue schématique de côté d'un véhicule selon l'invention ;
- la figure 2 est vue schématique en coupe selon la ligne II-II du véhicule de la figure 1 dans laquelle le collecteur est désaligné avec le rail ;
- la figure 3 est une vue selon la même coupe que la figure 2 du véhicule des figures 1 et 2 dans lesquelles le collecteur est aligné avec le rail ;
- la figure 4 représente de manière détaillé un module de détection de crête inclus dans un dispositif de détermination du véhicule des figures 1 à 3 ;
- la figure 5 est une courbe représentant l'évolution d'un indicateur de positionnement en fonction d'une position latérale du collecteur intégré au véhicule de la figure 1, par rapport au rail ; et
- la figure 6 est un organigramme de procédé mis en œuvre par un dispositif de détermination intégré au véhicule de la figure 1.

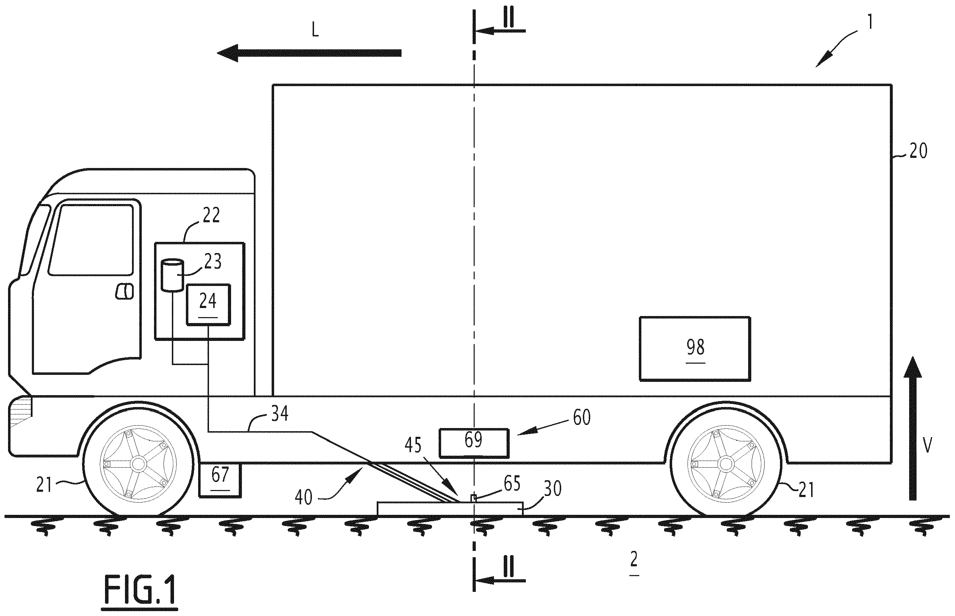

Comme représenté sur la figure 1, un véhicule 1 est propre à rouler sur une voie 2. Le véhicule 1 est un véhicule routier, par exemple un camion, un bus, ou une automobile.

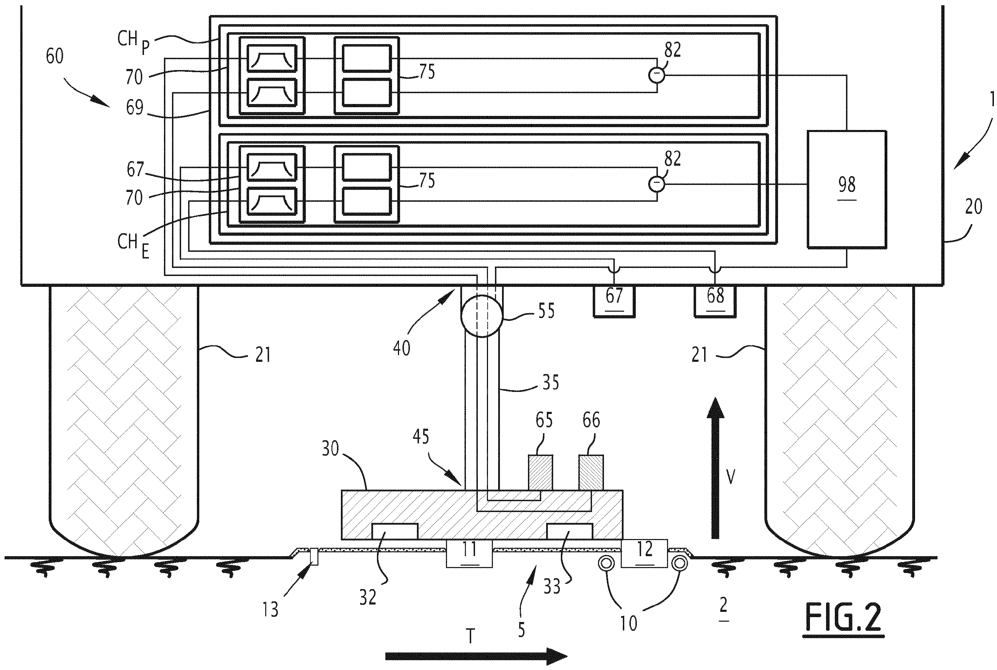

En référence à la figure 2, la voie 2 comprend une piste d'alimentation 5 associée à une source de champ magnétique 10. La piste d'alimentation 5 comporte plusieurs rails 11, 12, 13 parallèles s'étendant selon une direction longitudinale L et affleurant une surface de la voie 2.

Comme illustré sur la figure 2, la piste d'alimentation 5 comprend plus spécifiquement un rail positif 11 et un rail négatif 12 maintenus à des potentiels différents et constants. Plus spécifiquement le rail négatif 12 est maintenu à un potentiel proche de celui de la terre pour éviter une circulation de courant, depuis le rail positif 11, au-delà du rail négatif 12.

La piste d'alimentation 5 comprend un rail 13 servant de barrière de potentiel, relié à un potentiel voisin de celui de la terre pour éviter la circulation d'un courant depuis le rail positif 11, au-delà de ladite barrière 13.

Chacun des rails 11, 12, 13 est formé de segments successifs. Le rail positif 11 n'est alimenté qu'au passage du véhicule 1 comme décrit ci-après.

Géométriquement, le rail positif 11 est intercalé entre le rail négatif 12 et la barrière de potentiel 13.

Chaque segment s'étend sur une distance d'au moins 10 mètres. En outre, les rails positif 11 et négatif 12 présentent une largeur, définie dans une direction transversale T perpendiculaire à la direction longitudinale L, égale à 5 centimètres. La direction transversale est également appelée direction latérale dans la suite de la description. La largeur de la barrière de potentielle 13 est égale à 1 centimètre. Une distance entre chaque rail est égale à 15 centimètres.

La source de champ magnétique 10 est formée de boucles, ou spires, entourant un segment du rail négatif 12 chacune, alimentés par un courant alternatif. A cet effet, la voie est équipée d'un générateur de courant non représenté, propre à faire circuler dans chaque boucle 10 un courant alternatif dont une fréquence est nominalement égale à 38 KHz. Le courant alternatif est en outre modulé soit à 36 KHz soit à 40 KHz. Un tel courant alternatif induit donc un champ magnétique variable à la fréquence du courant. A titre d'exemple, une amplitude du courant circulant dans la source de champ magnétique 10 est par exemple égale à onze ampères. En outre, la modulation du courant, soit à 36kHz soit à 40kHz, induit des variations de fréquence détectables par le véhicule 1, via un capteur décrit ci-après. Ces variations servent de support pour y coder de l'information. Ainsi un pilotage de la modulation, alternativement entre 36kHz et 40kHz permet de coder des informations relatives à la voie 2, telles que : la présence de rails 11, 12, 13, la présence d'un obstacle sur la voie 2, ou encore que le segment du rail positif 11 est le dernier segment alimenté.

En variante, la source de champ magnétique 10 est formée de bobines composées de plusieurs boucles entourant chaque segment du rail négatif 12.

Le véhicule 1 comprend une caisse 20 reposant sur des roues 21 et une motorisation 22 dans la caisse 20.

La motorisation 22 est au moins partiellement électrique. Elle comprend une source d'énergie autonome 23 pour une motorisation autonome ainsi qu'un moteur 24 d'entrainement des roues 21 du véhicule 1. La source d'énergie autonome 23 est une batterie, une pile à hydrogène ou un réservoir d'essence ou de diesel couplé à un moteur thermique entraînant un générateur pour produire de l'énergie électrique.

Le moteur 24 est propre à être alimenté en énergie électrique le cas échéant par la source d'énergie autonome 23 ou par un collecteur 30, compris dans le véhicule 1, propre à collecter de l'énergie électrique par contact avec la piste d'alimentation 5.

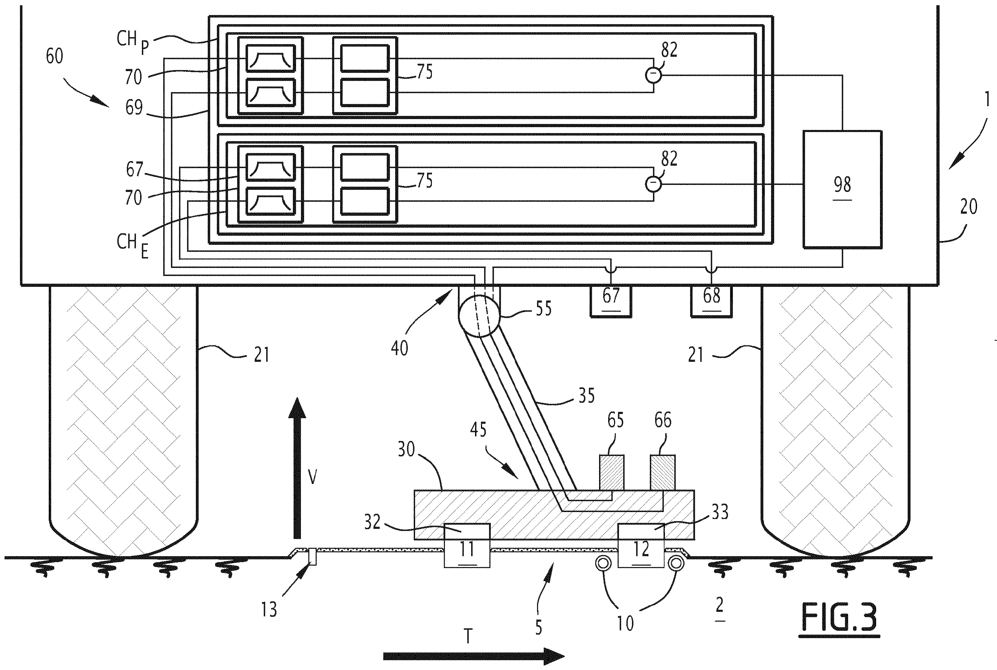

Le collecteur 30 comprend deux frotteurs 32, 33 chacun propre à venir en contact avec l'un des rails positif 11 et négatif 12 pour fermer un circuit électrique. Plus spécifiquement, dans l'exemple de la figure 3, l'un des frotteurs 32 est en contact avec le rail positif 11 et l'autre frotteur 33 est en contact avec le rail négatif 12.

De la connectique 34 permet d'acheminer l'énergie électrique depuis le collecteur 30 jusqu'au moteur 24 et éventuellement vers la source d'énergie autonome 23 dans le cas d'une batterie.

Le collecteur 30 est relié à la caisse 20 du véhicule 1 par un bras motorisé 35.

Le bras motorisé 35 définit une extrémité proximale 40 reliée à la caisse 20 et une extrémité distale 45 sur laquelle est fixé le collecteur 30.

L'extrémité distale 45 est située entre la caisse 20 et la voie 2.

Le bras motorisé 35 comprend un actionneur 55 localisé à son extrémité proximale 40. L'actionneur 55 est propre à effectuer une rotation du bras motorisé 35, au niveau de l'extrémité proximale 40, autour de la direction transversale T et d'une direction verticale V perpendiculaire aux directions longitudinale L et transversale T.

Sous l'action de l'actionneur 55, le collecteur 30 est mobile par rapport à la caisse 20 du véhicule 1 selon la direction transversale T. En outre, sous l'action de l'actionneur 55, le collecteur 30 est également mobile verticalement par rapport à la caisse 20, entre une configuration de rangement, aussi appelée configuration haute, dans laquelle il est en contact avec la caisse 20, et une configuration de collecte, dans laquelle il est en contact avec la voie 2. En outre, le collecteur 30 est positionnable dans une configuration intermédiaire entre la configuration de rangement et la configuration de collecte.

Lorsque le collecteur 30 est dans la configuration de collecte, il est propre à collecter de l'énergie électrique depuis la piste d'alimentation 5.

Sur les figures 1 à 3, le collecteur est en configuration de collecte.

Le véhicule 1 comprend en outre un dispositif 60 de détermination d'une position latérale du collecteur 30 par rapport au rail négatif 12 lorsque le collecteur 30 est en configuration de collecte.

Le dispositif de détermination 60 comprend deux capteurs de proximité 65, 66 disposés au droit du rail négatif 12 et fixés au collecteur 30. Une position des capteurs de proximité 65, 66 par rapport au collecteur 30 est connue. Chacun de ces capteurs 65, 66 est un capteur inductif, par exemple une bobine, propre à mesurer l'amplitude du champ magnétique émis par la source 10. L'envergure, selon la direction transversale T, de chaque capteur de proximité 65, 66 est sensiblement égale à 10 mm. Ces capteurs de proximité 65, 66 sont verticalement disposés entre le frotteur 33, destiné à venir en contact avec le rail négatif 12, et la caisse 20. Les capteurs de proximité 65, 66 sont transversalement positionnés de part et d'autre dudit frotteur 33 et distants l'un de l'autre d'une distance de 65 millimètres.

Le dispositif de détermination 60 comprend optionnellement deux capteurs d'éloignement 67, 68. Les capteurs d'éloignement 67, 68 sont des capteurs inductifs propres à mesurer le champ magnétique généré par la source de champ magnétique 10. A cet effet, les capteurs d'éloignement 67, 68 sont par exemple des bobines intégrées au véhicule 1. L'envergure, selon la direction transversale T, de chaque capteur de proximité 67, 68 est sensiblement égale à 120 mm. Les capteurs d'éloignement 67, 68 sont disposées sous la caisse 20 du véhicule 1, derrière l'essieu avant du véhicule 1. Ainsi, les champs magnétiques mesurés par les capteurs d'éloignement 67, 68 dépendent de la position latérale du véhicule 1 par rapport au rail négatif 12, et plus précisément par rapport à la source de champ magnétique 10. La position latérale du véhicule 1 est indépendante de la position latérale du collecteur 30.

Chaque capteur de proximité 65, 66 et d'éloignement 67, 68 est relié à une carte électronique 69 du dispositif de détermination 60, intégrée à la caisse 20.

Plus spécifiquement, la carte électronique 69 comprend une chaîne électronique de proximité CH_{P} connectée aux capteurs de proximité 65, 66 et propre à traiter les champs mesurés par lesdits capteurs 65, 66. La carte électronique 69 comprend en outre une chaîne électronique d'éloignement CH_{E} connectée aux capteurs d'éloignement 67, 68 et propre à traiter les champs mesurés par lesdits capteurs 65, 66.

La chaîne de proximité CH_{P} comprend un module de filtrage 70 configuré pour filtrer et amplifier chaque champ mesuré par les capteurs de proximité 65, 66. Le filtrage est du type passe-bande dont une bande passante est centrée sur la fréquence de la porteuse de 38kHz et d'une largeur inférieure à une dizaine de kilohertz. Chaque signal en sortie du module de filtrage 70, issu d'un des champs mesurés par les capteurs de proximité 65, 66, est nommé ci-après champ filtré. Le filtrage a pour but de réduire, dans chaque champ mesuré, une amplitude de bruits en dehors de la bande de fréquence comprise entre 36 kHz et 40 kHz. De tels bruits sont notamment causés par des éléments métalliques du véhicule 1, perturbant le champ magnétique produit par la source de champ magnétique 10. Le(s) traitement(s) effectué(s) sur les champs filtrés sont donc meilleurs que si il(s) avaient été effectué(s) directement sur les champs mesurés.

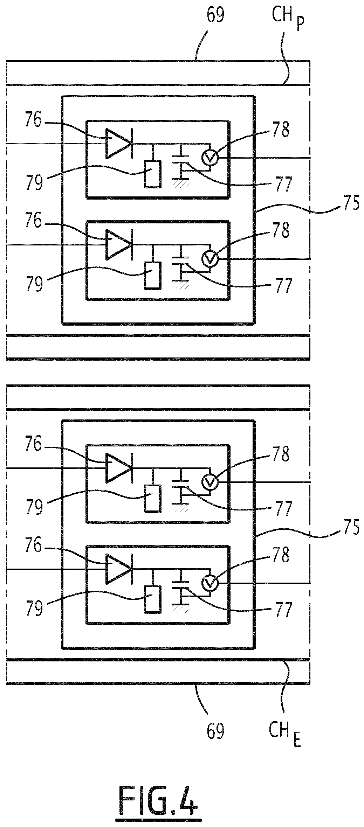

La chaîne de proximité CH_{P} comprend en outre un module de détection 75 de crête, aussi appelé détecteur de crête. En référence à la figure 4, le module de détection 75 est configuré pour détecter des crêtes dans chaque champ mesuré. Plus spécifiquement, le module de détection 75 est configuré pour détecter des maximum d'amplitude, en valeur absolue, dans chaque champ filtré. En outre, le module de détection de crête 75 est propre à fournir l'amplitude maximale de chaque champ mesuré, cette amplitude maximale étant prise égale au maximum d'amplitude correspondant à la crête détectée. Pour cela, le module de détection 75 comprend une diode 76 propre à redresser les champs filtrés, et un condensateur 77, connecté en série de la diode 76 et propre à emmagasiner le potentiel transmis par la diode 76. Ainsi, la tension aux bornes du condensateur 77 est égale à l'amplitude maximale du champ filtré. Le module de détection de crête 75 comprend alors un voltmètre 78 configuré pour lire la tension aux bornes du condensateur 76 à une fréquence préférentiellement égale à 400 Hz.

Le module de détection 75 comprend optionnellement en outre une résistance 79, connectée en parallèle du condensateur 77, pour permettre la décharge partielle du condensateur 77 lorsque l'amplitude du champ filtré et négative.

En variante non représentée, le module de détection 75 comprend un voltmètre propre à mesurer directement le champ filtré à une fréquence supérieure à 40 kHz, par exemple égale à 100 kHz. Le module de détection comprend alors un analyseur propre à déterminer l'amplitude maximale du champ filtré parmi celles mesurées.

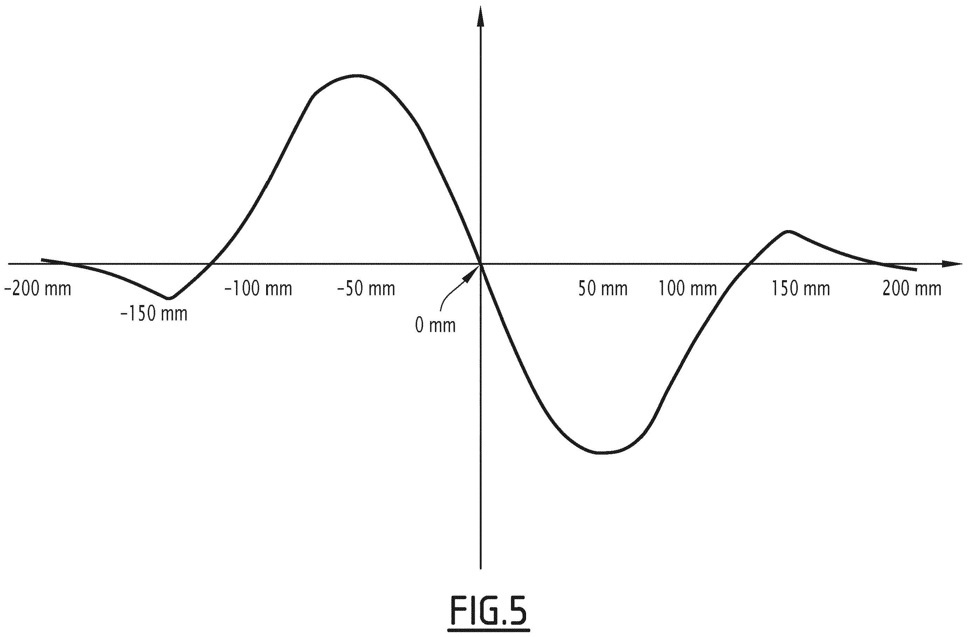

La chaîne de proximité CH_{P} comprend en outre un module de détermination 82 d'une position latérale du collecteur 30 par rapport au rail négatif 12 à partir des amplitudes maximales de chaque champ mesuré. A cet effet, le module de détermination 82 est un soustracteur propre à calculer une différence entre les amplitudes maximales de chaque champ mesuré. A titre d'exemple, le module de détermination 82 est configuré pour toujours soustraire, à l'amplitude maximale du champ mesuré par le capteur de proximité 65 à gauche, l'amplitude maximale de champ mesurée par le capteur de proximité 66 à droite. L'évolution de la grandeur issue du module de détermination 82, en fonction de la distance latérale du collecteur 30 par rapport à la source de champ magnétique 10, est représentée sur la figure 5. La grandeur obtenue par le module de détermination 82 est appelée ci-après position latérale du collecteur 30 par rapport au rail négatif 12 et plus particulièrement par rapport à la source de champ magnétique 10. En effet, la position latérale quantifie une distance, selon la direction transversale, entre le collecteur 30 et la source de champ magnétique 10. En outre, lorsque le collecteur 30 est latéralement aligné avec la source de champ magnétique 10, la position latérale est sensiblement égale à 0.

En référence à la figure 5, lorsque la position latérale est positive, le collecteur 30 est transversalement à gauche du rail négatif 12. Lorsque la position latérale est négative, le collecteur 30 est transversalement à droite du rail négatif 12.

La chaîne d'éloignement CH_{E} est identique à la chaîne de proximité CH_{P} à l'exception qu'elle est connectée aux capteurs d'éloignement 67, 68 au lieu des capteurs de proximité 65, 66 et que la grandeur issue du module de détermination 82 de la chaîne d'éloignement CH_{E} caractérise la position latérale du véhicule 1 par rapport à la source de champ magnétique 10 puisque les capteurs d'éloignement 67, 68 sont solidaires du véhicule 1 et non du collecteur 30.

Le véhicule comprend également un dispositif 98 de pilotage de l'actionneur 55 du bras motorisé 35. Le dispositif de pilotage 98 est stocké dans la caisse 20. Il est configuré pour recevoir la position latérale du véhicule 1 par rapport au rail négatif 12. Le dispositif de pilotage 98 est en outre adapté pour, si la position latérale reçue est comprise dans un intervalle prédéfini autour de la valeur zéro, faire passer le collecteur 30 de la configuration de rangement à la configuration de collecte en pilotant l'actionneur 55.

Le dispositif de pilotage 98 est propre à recevoir la position latérale du véhicule 1 par rapport au rail négatif 12 ainsi que la position du collecteur 30 par rapport au rail négatif 12. Le dispositif de pilotage 98 est configuré pour, lorsque le véhicule 1 est latéralement centré par rapport au rail négatif 12, commander le déplacement du collecteur 30 vers la configuration intermédiaire. Le dispositif de pilotage 98 est alors propre à commander le déplacement du collecteur 30 vers la configuration de collecte une fois que le champ mesuré par les capteurs de proximité 65, 66 est supérieur au champ mesuré par les capteurs d'éloignement 67, 68. Le dispositif de pilotage 98 est en outre configuré pour, si la position latérale du collecteur 30 par rapport au rail négatif 12 est négative, commander un déplacement transversal du collecteur 30 vers la gauche en pilotant l'actionneur 55. Réciproquement, le dispositif de pilotage 98 est en outre configuré pour, si la position latérale du collecteur 30 par rapport au rail négatif 12, est positive, piloter un déplacement transversal du collecteur 30 vers la droite.

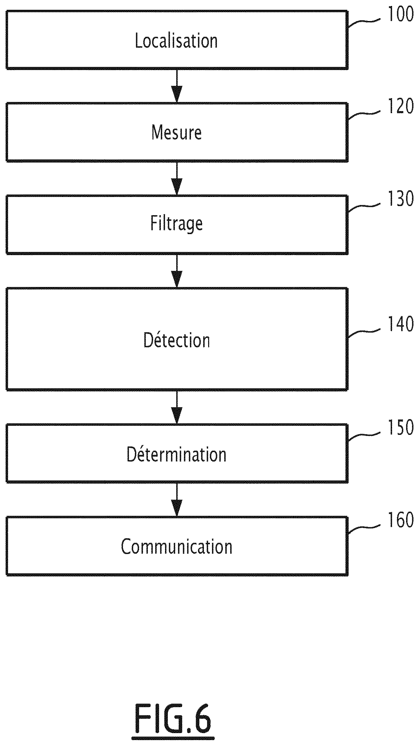

Le fonctionnement du véhicule 1, du dispositif de détermination 60 et plus particulièrement de la chaîne de proximité CH_{P} va à présent être décrit en référence à la figure 6 représentant un organigramme d'un procédé mis en œuvre par l'invention.

Initialement, le véhicule 1 roule sur la voie 2. Un système d'alimentation alimente alors les segments correspondant des rails positif 11 et négatif 12. Les capteurs d'éloignement 67, 68 détectent alors la présence du rail négatif 12.

Le collecteur 30 est en configuration de rangement.

Lors d'une étape de localisation 100 du véhicule 1 par rapport au rail négatif 12, les capteurs d'éloignement 67, 68 mesurent le champ magnétique généré par la source 10. Toujours lors de l'étape de localisation 100, la chaîne d'éloignement CH_{E} détermine la position latérale du véhicule 1 par rapport au rail négatif 12. Lorsque les capteurs d'éloignement 67, 68 sont latéralement centrés par rapport au rail négatif 12, le dispositif de pilotage 98 pilote, via l'actionneur 55, le déplacement du collecteur 30 vers la configuration intermédiaire.

Lors d'une étape de mesure 120, les capteurs de proximité 65, 66 mesurent le champ magnétique généré par la source 10. Lorsque les champs mesurés par les capteurs de proximité 65, 66 sont supérieurs à ceux mesurés par les capteurs d'éloignement 67, 68, le dispositif de pilotage 98 pilote le déplacement du collecteur 30 vers la configuration de collecte.

Lors d'une étape de filtrage 130, le module de filtrage 70 applique un filtre passe-bande prédéterminé aux champs mesurés par les capteurs de proximité 65, 66.

Lors d'une étape d'estimation 140, le module de détection de crête 75 estime l'amplitude maximale de chaque champ filtré.

A cet effet, chaque champ filtré alimente un condensateur 77 respectif, compris dans le module de détection 75 et le voltmètre 78 dudit module 75 mesure la tension aux bornes du condensateur 77. La tension mesurée est alors égale à l'amplitude maximale de chaque champ filtré.

En variante, le module de détection 75 échantillonne chaque champ filtré à une fréquence supérieure à 40 kHz et mesure le maximum de l'amplitude de chaque champ échantillonné.

Lors d'une étape de détermination 150, le module de détermination 82 détermine la position latérale du collecteur 30 par rapport au rail négatif 12. A cet effet, le module de détermination 82 calcule la position latérale du collecteur 30 comme étant égal à la différence entre les amplitudes de chaque champ mesuré.

Enfin, lors d'une étape de communication 160, le dispositif de détermination 60 communique au dispositif de pilotage 98, la position latérale du collecteur 30 par rapport au rail négatif 12 déterminée.

Le dispositif de pilotage 98 pilote donc l'actionneur 55 afin de déplacer transversalement le collecteur 30 pour corriger, si nécessaire, la position latérale du collecteur 30 par rapport au rail négatif 12.

Lorsque le collecteur 30 est transversalement aligné par rapport au rail négatif 12, le collecteur 30 collecte l'énergie électrique en provenance de la piste d'alimentation 5 afin d'alimenter le moteur 24 et/ou la batterie 23.

On comprend alors que le procédé, le dispositif de détermination 60 et le véhicule 1 selon l'invention permettent de simplifier la détermination de la position latérale du collecteur 30 par rapport au rail négatif 12 et donc d'améliorer un positionnement dudit collecteur 30 dans un but de collecte d'énergie électrique en provenance de la piste d'alimentation 5.

## Revendications

1. Procédé de détermination d'une position latérale d'un collecteur (30) par rapport à un rail (12) alimenté en énergie électrique, le rail (12) étant associé à une source de champ magnétique (10), le collecteur (30) étant propre à collecter de l'énergie électrique par contact avec le rail (12), le procédé comprenant les étapes successives suivantes :
- mesure (120) d'un champ magnétique par chacun de deux capteurs de proximité (65, 66) disposés au droit du rail (12) et dont une position par rapport au collecteur (30) est connue, et
- détermination (150) de la position latérale du collecteur (30) à partir des champs magnétiques mesurés,
dans lequel, lors de l'étape de détermination (150), la position latérale du collecteur (30) par rapport au rail (12) est déterminée à partir des amplitudes de chaque champ magnétique mesuré,
et dans lequel lors de l'étape de détermination (150), la position latérale du collecteur (30) par rapport au rail (12) est déterminée à partir d'une différence entre les amplitudes de chaque champ magnétique mesuré,
**caractérisé en ce que** le procédé comprend en outre, entre l'étape de mesure (120) et l'étape de détermination (150), une étape de filtrage (130) par un filtre passe-bande de chaque champ magnétique mesuré, et **en ce que** lors de l'étape détermination (150), la position latérale du collecteur (30) par rapport au rail (12) est déterminée à partir de chaque champ magnétique filtré,
le procédé comprenant en outre entre l'étape de filtrage (130) et l'étape de détermination (150), une étape de détection (140), dans chaque champ mesuré, d'un maximum d'amplitude dudit champ.

2. Dispositif de détermination (60) d'une position latérale d'un collecteur (30) par rapport à un rail (12) alimenté en énergie électrique, le rail (12) étant associé à une source de champ magnétique (10), le collecteur étant propre à collecter de l'énergie électrique par contact avec le rail (12), le dispositif de détermination (60) comprenant :
- deux capteurs de proximité (65, 66) propres à être disposés au droit du rail (12) et dont une position par rapport au collecteur (30) est connue, chaque capteur de proximité (65, 66) étant propre à mesurer un champ magnétique, et
- un module de détermination (82) propre à déterminer une position latérale du collecteur (30) à partir des champs magnétiques mesurés,
dans lequel le module de détermination (82) est configuré pour déterminer la position latérale du collecteur (30) par rapport au rail (12) à partir des amplitudes de chaque champ magnétique mesuré et à partir d'une différence entre les amplitudes de chaque champ magnétique mesuré,
**caractérisé en ce que** le dispositif électronique de détermination (60) comprend en outre un module de filtrage (70) configuré pour filtrer et amplifier chaque champ mesuré par les capteurs de proximité (65, 66), le module de détermination (82) étant configuré pour déterminer la position latérale du collecteur (30) par rapport au rail (12) à partir des amplitudes de chaque champ magnétique filtré, le filtrage étant du type passe-bande,
le dispositif électronique de détermination (60) comprenant en outre un module de détection (75) de crête configuré pour détecter des maximums d'amplitude, en valeur absolue, dans chaque champ filtré.

3. Véhicule (1) routier propre à rouler sur une voie (2) comprenant un rail (12) alimenté en énergie électrique auquel une source de champ magnétique (10) est associée, le véhicule (1) comprenant une caisse (20), un collecteur (30) propre à collecter de l'énergie électrique par contact avec le rail (12) et un dispositif de détermination (60) d'une position latérale du collecteur (30) par rapport au rail (12), le collecteur (30) étant mobile par rapport à la caisse (20),
**caractérisé en ce que** le dispositif de détermination (60) est selon la revendication 2.

4. Véhicule (1) selon la revendication 3, **caractérisé en ce qu'**il comprend en outre deux capteurs d'éloignement (67, 68) propre à mesurer le champ magnétique de la source de champ magnétique (10), et **en ce que** le dispositif de détermination (60) comprend une chaîne d'éloignement (CH_{E}) comportant un ensemble de module(s) de traitement (70, 75, 82) configurés pour déterminer la localisation du véhicule (1) par rapport au rail (12) à partir du champ magnétique mesuré par les capteurs d'éloignement (67, 68).

5. Véhicule (1) selon la revendication précédente, **caractérisé en ce que** l'ensemble de module(s) de traitement (70, 75, 82) de la chaîne d'éloignement (CH_{E}) comprend un module de filtrage (70) de chaque champ mesuré par les capteurs d'éloignement (67, 68), un module de détection de crête (75) configuré pour détecter un maximum d'amplitude de chaque champ filtré et un module de détermination (82) d'une position latérale du véhicule (1) par rapport au rail (12) à partir des maxima d'amplitude.

6. Véhicule (1) selon l'une quelconque des revendications 3 à 5, **caractérisé en ce que** le véhicule (1) comprend en outre un bras motorisé (35) reliant le collecteur (30) à la caisse (20), le collecteur (30) étant mobile par rapport à la caisse (20) sous l'action du bras motorisé (35), selon une direction transversale (T) perpendiculaire à la direction d'avancement du véhicule (1).

7. Véhicule (1) selon l'une quelconque des revendications 4 à 6, **caractérisé en ce que** le dispositif de détermination (60) d'une position latérale du collecteur (30) par rapport au rail (12) est configuré pour déterminer une position latérale du collecteur (30) seulement si une localisation de véhicule (1) par rapport au rail (12) déterminée par le dispositif de localisation (90) du véhicule (1) par rapport au rail (12) respecte un critère prédéfini.

## Patentansprüche

1. Verfahren zur Bestimmung einer seitlichen Position eines Kollektors (30) in Bezug auf eine mit elektrischer Energie versorgte Schiene (12), wobei die Schiene (12) mit einer Magnetfeldquelle (10) assoziiert ist, wobei der Kollektor (30) geeignet ist, um durch Kontakt mit der Schiene (12) elektrische Energie abzunehmen, das Verfahren umfassend die folgenden aufeinanderfolgenden Schritte:
- Messen (120) eines Magnetfelds durch jeden von zwei Näherungssensoren (65, 66), die an der Schiene (12) angeordnet sind und deren Position in Bezug auf den Kollektor (30) bekannt ist, und
- Bestimmen (150) der seitlichen Position des Kollektors (30) anhand der gemessenen Magnetfelder,
wobei bei dem Bestimmungsschritt (150) die seitliche Position des Kollektors (30) in Bezug auf die Schiene (12) anhand von Amplituden von jedem gemessenen Magnetfeld bestimmt wird,
und wobei bei dem Bestimmungsschritt (150) die seitliche Position des Kollektors (30) in Bezug auf die Schiene (12) anhand einer Differenz zwischen den Amplituden von jedem gemessenen Magnetfeld bestimmt wird,
**dadurch gekennzeichnet, dass** das Verfahren zwischen dem Schritt eines Messens (120) und dem Schritt eines Bestimmens (150) ferner einen Filterungsschritt (130) von jedem gemessenen Magnetfeld durch ein Bandpassfilter umfasst, und dass bei dem Bestimmungsschritt (150) die seitliche Position des Kollektors (30) in Bezug auf die Schiene (12) anhand von jedem gefilterten Magnetfeld bestimmt wird,
das Verfahren ferner umfassend zwischen dem Filterschritt (130) und dem Bestimmungsschritt (150) einen Schritt eines Erfassens (140), in jedem gemessenen Feld, eines Maximums der Amplitude des Felds.

2. Bestimmungsvorrichtung (60) einer seitlichen Position eines Kollektors (30) in Bezug auf eine Schiene (12), die mit elektrischer Energie versorgt wird, wobei die Schiene (12) mit einer Magnetfeldquelle (10) assoziiert ist, wobei der Kollektor geeignet ist, um durch Kontakt mit der Schiene (12) elektrische Energie abzunehmen, die Bestimmungsvorrichtung (60) umfassend:
- zwei Näherungssensoren (65, 66), die geeignet sind, um an der Schiene (12) angeordnet zu werden und deren Position in Bezug auf den Kollektor (30) bekannt ist, wobei jeder Näherungssensor (65, 66) geeignet ist, um ein Magnetfeld zu messen, und
- ein Bestimmungsmodul (82), das geeignet ist, um eine seitliche Position des Kollektors (30) anhand gemessener Magnetfelder zu bestimmen,
wobei das Bestimmungsmodul (82) konfiguriert ist, um die seitliche Position des Kollektors (30) in Bezug auf die Schiene (12) anhand Amplituden von jedem gemessenen Magnetfeld und anhand einer Differenz zwischen den Amplituden von jedem gemessenen Magnetfeld zu bestimmen,
**dadurch gekennzeichnet, dass** die elektronische Bestimmungsvorrichtung (60) ferner ein Filtermodul (70) umfasst, das konfiguriert ist, um jedes von den Näherungssensoren (65, 66) gemessene Feld zu filtern und zu verstärken, wobei das Bestimmungsmodul (82) konfiguriert ist, um die seitliche Position des Kollektors (30) in Bezug auf die Schiene (12) anhand Amplituden von jedem gefilterten Magnetfeld zu bestimmen, wobei die Filterung vom Typ Bandpass ist,
die elektronische Bestimmungsvorrichtung (60) ferner umfassend ein Spitzenwerterfassungsmodul (75), das konfiguriert ist, um Amplitudenmaxima, als Absolutwert, in jedem gefilterten Feld zu erfassen.

3. Straßenfahrzeug (1), das geeignet ist, um auf einer Fahrbahn (2) zu fahren, umfassend eine mit elektrischer Energie versorgte Schiene (12), mit der eine Magnetfeldquelle (10) assoziiert ist, das Fahrzeug (1) umfassend einen Wagenkasten (20), einen Kollektor (30), der geeignet ist, um durch Kontakt mit der Schiene (12) elektrische Energie abzunehmen, und eine Bestimmungsvorrichtung (60) einer seitlichen Position des Kollektors (30) in Bezug auf die Schiene (12), wobei der Kollektor (30) in Bezug auf den Wagenkasten (20) beweglich ist,
**dadurch gekennzeichnet, dass** die Bestimmungsvorrichtung (60) gemäß Anspruch 2 ist.

4. Fahrzeug (1) nach Anspruch 3, **dadurch gekennzeichnet, dass** es ferner zwei Entfernungssensoren (67, 68) umfasst, die geeignet sind, um das Magnetfeld der Magnetfeldquelle (10) zu messen, und dass die Bestimmungsvorrichtung (60) eine Entfernungskette (CH_{E}) umfasst, umfassend einen Satz von Verarbeitungsmodul(en) (70, 75, 82), die konfiguriert sind, um den Standort des Fahrzeugs (1) in Bezug auf die Schiene (12) anhand des von den Entfernungssensoren (67, 68) gemessenen Magnetfelds zu bestimmen.

5. Fahrzeug (1) nach dem vorherigen Anspruch, **dadurch gekennzeichnet, dass** der Satz von Verarbeitungsmodul(en) (70, 75, 82) der Entfernungskette (CH_{E}) ein Filtermodul (70) für jedes von den Entfernungssensoren (67, 68) gemessene Feld, ein Spitzenerfassungsmodul (75), das konfiguriert ist, um ein Amplitudenmaximum von jedem gefilterten Feld zu erfassen, und ein Bestimmungsmodul (82) einer seitlichen Position des Fahrzeugs (1) in Bezug auf die Schiene (12) anhand der Amplitudenmaxima umfasst.

6. Fahrzeug (1) nach einem der Ansprüche 3 bis 5, **dadurch gekennzeichnet, dass** das Fahrzeug (1) ferner einen motorisierten Arm (35) umfasst, der den Kollektor (30) mit dem Wagenkasten (20) verbindet, wobei der Kollektor (30) unter der Wirkung des motorisierten Arms (35) in Bezug auf den Wagenkasten (20) in einer Querrichtung (T) senkrecht zu der Fahrtrichtung des Fahrzeugs (1) beweglich ist.

7. Fahrzeug (1) nach einem der Ansprüche 4 bis 6, **dadurch gekennzeichnet, dass** die Bestimmungsvorrichtung (60) einer seitlichen Position des Kollektors (30) in Bezug auf die Schiene (12) konfiguriert ist, um eine seitliche Position des Kollektors (30) nur dann zu bestimmen, wenn eine Lokalisierung des Fahrzeugs (1) in Bezug auf die Schiene (12), die durch die Lokalisierungsvorrichtung (90) des Fahrzeugs (1) in Bezug auf die Schiene (12) bestimmt wird, ein vordefiniertes Kriterium erfüllt.

## Claims

1. A method for determining a lateral position of a collector (30) relative to a rail (12) supplied with electrical energy, the rail (12) being associated with a magnetic field source (10), the collector (30) being suitable for collecting electrical energy by contact with the rail (12), the method comprising the following successive steps:
- measuring (120) a magnetic field by each of two proximity sensors (65, 66) arranged in line with the rail (12) and whose position relative to the collector (30) is known, and
- determining (150) the lateral position of the collector (30) from the measured magnetic fields,
wherein, in the determination step (150), the lateral position of the collector (30) relative to the rail (12) is determined from the amplitudes of each measured magnetic field,
and wherein, in the determination step (150), the lateral position of the collector (30) relative to the rail (12) is determined from a difference between the amplitudes of each measured magnetic field,
**characterised in that** the method further comprises, between the measurement step (120) and the determination step (150), a filtering step (130) each measured magnetic field using a bandpass filter, and **in that** during the determination step (150), the lateral position of the collector (30) relative to the rail (12) is determined on the basis of each filtered magnetic field,
the method further comprising, between the filtering step (130) and the determination step (150), a step (140) of detecting, in each measured field, a maximum amplitude of said field.

2. A device for determining (60) a lateral position of a collector (30) relative to a rail (12) supplied with electrical energy, the rail (12) being associated with a magnetic field source (10), the collector being suitable for collecting electrical energy by contact with the rail (12), the determination device (60) comprising:
- two proximity sensors (65, 66) adapted to be disposed in line with the rail (12) and whose position relative to the collector (30) is known, each proximity sensor (65, 66) being adapted to measure a magnetic field, and
- a determination module (82) for determining a lateral position of the collector (30) from the measured magnetic fields,
wherein the determination module (82) is configured to determine the lateral position of the collector (30) relative to the rail (12) from the amplitudes of each measured magnetic field and from a difference between the amplitudes of each measured magnetic field,
**characterised in that** the electronic determination device (60) further comprises a filtering module (70) configured to filter and amplify each field measured by the proximity sensors (65, 66), the determination module (82) being configured to determine the lateral position of the collector (30) relative to the rail (12) on the basis of the amplitudes of each filtered magnetic field, the filtering being of the bandpass type,
the electronic determination device (60) further comprising a peak detection module (75) configured to detect amplitude maxima, in absolute value, in each filtered field.

3. A road vehicle (1) suitable for travelling on a track (2) comprising a rail (12) powered by electrical energy and with which a magnetic field source (10) is associated, the vehicle (1) comprising a body (20), a collector (30) suitable for collecting electrical energy by contact with the rail (12) and a device (60) for determining a lateral position of the collector (30) relative to the rail (12), the collector (30) being movable relative to the body (20),
**characterised in that** the determination device (60) is according to claim 2.

4. The vehicle (1) according to claim 3, **characterised in that** it also comprises two distance sensors (67, 68) for measuring the magnetic field of the magnetic field source (10), and **in that** the determination device (60) comprises a distance chain (CH_{E}) comprising a set of processing module(s) (70, 75, 82) configured to determine the location of the vehicle (1) relative to the rail (12) on the basis of the magnetic field measured by the distance sensors (67, 68).

5. The vehicle (1) according to the preceding claim, **characterised in that** the set of processing module(s) (70, 75, 82) of the distance chain (CH_{E}) comprises a module (70) for filtering each field measured by the distance sensors (67, 68), a peak detection module (75) configured to detect a maximum amplitude of each filtered field and a module (82) for determining a lateral position of the vehicle (1) relative to the rail (12) on the basis of the amplitude maxima.

6. The vehicle (1) according to any one of claims 3 to 5, **characterised in that** the vehicle (1) further comprises a motorised arm (35) connecting the collector (30) to the body (20), the collector (30) being movable relative to the body (20) under the action of the motorised arm (35), in a transverse direction (T) perpendicular to the direction of forward travel of the vehicle (1).

7. The vehicle (1) according to any one of claims 4 to 6, **characterised in that** the device (60) for determining a lateral position of the collector (30) relative to the rail (12) is configured to determine a lateral position of the collector (30) only if a location of the vehicle (1) relative to the rail (12) determined by the device (90) for locating the vehicle (1) relative to the rail (12) complies with a predefined criterion.
